# EUROPEAN PATENT APPLICATION

(11) **EP 1 376 333 A2**
(43) Date of publication of application: **02.01.2004**
(21) Application number: 03253980.1
(22) Date of filing: 24.06.2003
(51) Int. Cl.: G06F 3/12

(54) **Print control apparatus, print control method, program product, and print system**

(30) Priority: 26.06.2002 JP 2002186181; 19.07.2002 JP 2002210387
(71) Applicant: CANON KABUSHIKI KAISHA, Tokyo (JP)
(72) Inventor: Kurotsu, Noriyoshi, Canon Kabushiki Kaisha, Tokyo (JP)
(74) Representative: Beresford, Keith Denis Lewis

(57) **Abstract**

In order to perform smooth scheduling and optimize job scheduling in the whole system, in a print system for processing print jobs inputted to a queue on the basis of priorities, upon proxy printing, the priority of the job is raised and this job is preferentially processed rather than other jobs.

## Description

The invention relates to a print system which has a plurality of queues for managing a plurality of jobs and can perform proxy printing from one queue to another queue.

Hitherto, a print system which detects an error of a printing apparatus or discriminates a size of job inputted to a queue and can perform proxy printing to another print queue or the printing apparatus has existed.

In the conventional print system, however, there is a problem such that the job is added to the end of the queue of a proxy destination at the time of the proxy printing and, if the proxy printing is executed, it takes a longer time to complete the printing than in the case where the proxy printing is not performed. In a system which discriminates the execution of the proxy printing upon job transmission, there is a problem such that the job is unconditionally transmitted to a device which can print, so that the job which was proxy-printed later is printed first.

The invention is made to address the above problems and it is an object of the invention to execute smooth scheduling also upon proxy printing and optimize job scheduling in view of the whole system.

According to the invention, there is provided a print control apparatus comprising:
a changing unit for changing a priority of a job upon proxy printing; and
an executing unit for executing a printing process on the basis of the priority changed by the changing unit.

According to the invention, there is provided a print system comprising:
a plurality of print queues for managing a plurality of jobs;
scheduling means for processing a print job inputted to each of the queues on the basis of priorities allocated to the jobs;
proxy printing means for making proxy of the job from the original queue to another queue; and
automatic priority changing means for automatically raising the priority of the job by one point when the proxy printing is executed.

According to the invention, there is also provided a print system comprising:
a plurality of print queues for managing a plurality of jobs;
scheduling means for processing a print job inputted to each of the queues on the basis of priorities allocated to the jobs;
proxy printing means for making proxy of the job from the original queue to another queue; and
priority automatic setting means for automatically setting the priority of the job on the basis of reception time of the jobs when the proxy printing is executed.

A number of embodiments of the invention will now be described, by way of example only, with reference to the accompanying drawings in which:
Fig. 1 is a functional block diagram of a print system to which an embodiment of the invention is applied;
Fig. 2 is a flowchart showing an outline of the print system to which the embodiment of the invention is applied;
Fig. 3 is an example of a job information management table in the print system of an embodiment of the invention;
Fig. 4 is a flowchart showing an example of a job receiving process;
Fig. 5 is a flowchart showing an outline of a proxy printing process in the print system of an embodiment of the invention;
Fig. 6 is a flowchart showing an example of a job transmitting process;
Fig. 7 is a flowchart showing an outline of a proxy printing process in a print system according to another embodiment of the invention;
Fig. 8 is a diagram showing a relation between a print system 660 provided by Windows (registered trademark) and print jobs in a print job control system;
Fig. 9 is a diagram showing a user interface display screen for setting a print property of logical printer management 705; and
Fig. 10 is a diagram showing an outline of a network construction using the print system of an embodiment of the invention.

An embodiment of the invention will be described hereinbelow with reference to the drawings.

### <Example of construction of a print processing system>

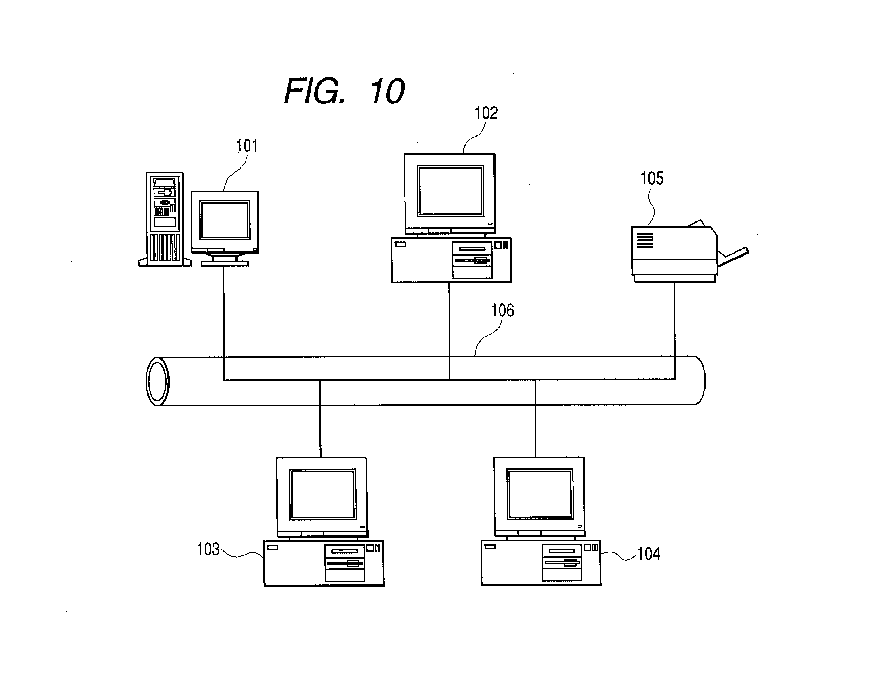

Fig. 10 is a diagram showing a construction of a print processing system according to an embodiment.

In the diagram, reference numerals 101, 102, 103, and 104 denote network computers which are connected to a network 106 and can communicate with each other. Typically, they are personal computers (PCs).

Among them, reference numerals 102, 103, and 104 denote the client computers (hereinafter, referred to as clients) which are connected to the network 106 by a network cable such as Ethernet (registered trademark) or the like. The clients 102 to 104 can execute various programs such as an application program and the like. A printer driver having a function for converting print data into a printer language corresponding to a printer has been installed in each client. It is now assumed that each client supports a plurality of printer drivers.

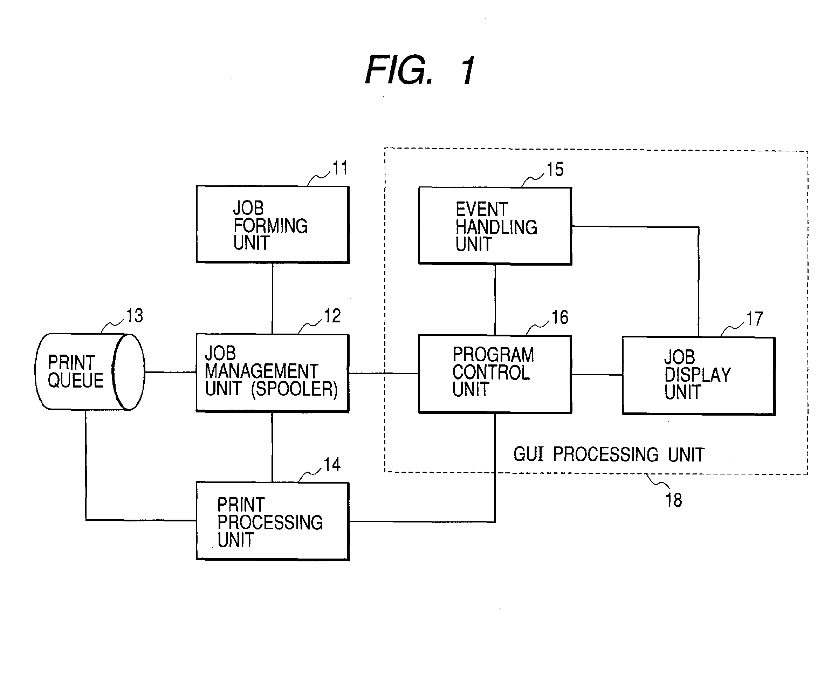

On the other hand, reference numeral 101 denotes the server computer (hereinafter, referred to as a server) which is connected to the network 106 by the network cable. Theserver 101 accumulates files which are used on the network and monitors a using state of the network 106. The server also functions as a print server for managing printers connected to the network 106. Specifically speaking, the print server 101 has: a function for storing print jobs to which print requests have been made by the client computers 102, 103, and 104 and include print data and printing them; a function for receiving job information including no print data from the client computers 102 to 104, managing print order, and notifying transmission permission of the print job including the print data to the client whose print order has come; a function for obtaining various information such as status and print job of a printer device (print device) 105, which will be explained hereinlater and notifying the client computers 102 to 104 of them; and the like. The server computer 101 is logical existence in which the functions of the server operate in the print system of the invention. As shown in Fig. 1, the dedicated server computer can be also provided. It is also possible to substitute the functions of the server computer for the functions of the client computers 102 to 104 or the printer device 105.

Reference numeral 105 denotes the printer device as a print control unit. The printer device 105 is connected to the network 106 via a network interface (not shown), analyzes the print jobs including the print data which are transmitted from the client computers, converts them into dot images one page by one, and prints them. Although only one printer device 105 is shown in the diagram, a plurality of other printer devices can be also connected. Functions of the printer devices can be also different.

Reference numeral 106 denotes the network which connects the client computers 102 to 104, the print server 101, the printer device 105, and the like.

Fig. 1 is a logical block diagram showing functions of a print system according to the embodiment of the invention. The print system is constructed by: a job forming unit 11 for converting data; a job management unit 12 for monitoring a process of a job regarding a printing process; a print queue 13; a GUI processing unit 18 constructing a user interface portion; and a print processing unit 14 for actually executing the printing process.

The job forming unit 11 has a function for converting job data received from an outside into a format which can be understood by a subsequent subsystem and transferring the converted data to the job management unit 12. If the job forming unit 11 is constructed on a user PC, the job forming unit 11 has a function for converting a document formed by a word processor, a spreadsheet, or the like into job data in a format according to an external specification of the printing apparatus. Further, if the job forming unit 11 is constructed on the printing apparatus, the job forming unit 11 has a function for converting the job data in an external format received from a host computer into a data format which is managed in the apparatus.

The job management unit 12 has a function generally called a spooler. The job management unit 12 has functions for storing jobs received from the job forming unit 11 into the print queue 13 (spooling process) and sequentially reading out the jobs from the print queue 13 by a FIFO method (de-spooling process) and transferring the jobs to the print processing unit 14. The job management unit 12 has functions such as stop, restart, and deletion of the job, change in priority, and the like which have been defined by ISO10175 and has a role of receiving commands from an external system and executing those functions. The job management unit 12 can be arranged to one or both of the printing apparatus and the host computer.

The jobs in the print queue 13 are identified by unique IDs. The job management unit 12 has a function for managing a correspondence between the IDs and the job data. All subsystems which use the job management unit 12 can control the jobs by designating the IDs. The print queue 13 can be arranged on an arbitrary non-volatile memory medium such as hard disk, NVRAM, DVD-RAM, or the like or a volatile memory such as a RAM or the like and it is not always necessary that the print queue 13 exists on the same apparatus as that of the job management unit 12.

Reference numeral 14 denotes the print processing unit having roles of developing the job data sent from the job management unit 12 into a format according to a printer engine and transferring it onto recording paper by using ink, toner, or the like.

Reference numeral 18 denotes the GUI processing unit having an event handling unit 15, a program control unit 16, and a job display unit 17. The GUI processing unit 18 has a role of a window to provide a display of a list of the jobs managed by the job management unit 12 to the user and supply an input from the user to the print system. The GUI processing unit 18 is generally arranged on the printing apparatus or the PC of the user or the operator.

The event handling unit 15 has roles in handling hardware interruption from an input apparatus such as keyboard, mouse, touch panel, or the like, forming logical events such as mouse movement event, mouse click event, keyboard depression event, and the like, and calling back a processing program defined by the program control unit 16.

The program control unit 16 has functions for analyzing, in detail, the event supplied from the event handling unit 15, detecting the instructed job from the information of the jobs displayed on the job display unit 17, and transferring a request to the job management unit 12 in order to execute a command process in response to the detected job. The program control unit 16 further has a function for obtaining a list of the jobs from the job management unit 12 or instructing the job display unit 17 to update the display in accordance with a job change event notification from the job management unit 12 as necessary.

The job display unit 17 has a graphical user interface.

Block shown in Fig. 1 can be arranged on one printing apparatus or different printing apparatuses or the host computers every block, respectively. Further, the number of blocks is not limited to one in one print system. In the system of the invention, a plurality of print processing units are provided and the print queues are also provided for the print processing units in a one-to-one correspondence relational manner. The present print system is constructed in a manner such that if a fault occurs in the print processing unit, the job which is in a "printing" status or a "print waiting" status can be moved (proxy printing) from the print queue to another print queue.

A layout of the blocks in the system is provided for the system by an initialization file, a directory, or hardware coding to a program code. If two blocks exist in the same process, a procedure call (function call) or message communication is used as inter-block communicating means. If the blocks exist in different processes or PCs, a socket of TCP/IP, an RPC, or the like is used as inter-block communicating means. In any of the above cases, communication can be made between the blocks irrespective of the layout of the blocks.

Although the blocks can be arranged in arbitrary apparatuses, they are fixed in principle when the print system to which the invention is applied is made operative. For example, the job display unit does not dynamically move to the printing apparatus from the host computer which is operated by the user. As an exception, the blocks such as job management unit, print processing unit, and the like which can move logically among a plurality of apparatuses in accordance with an error or a processing situation can exist. <Relation between the Windows (registered trademark) print system and the print jobs>

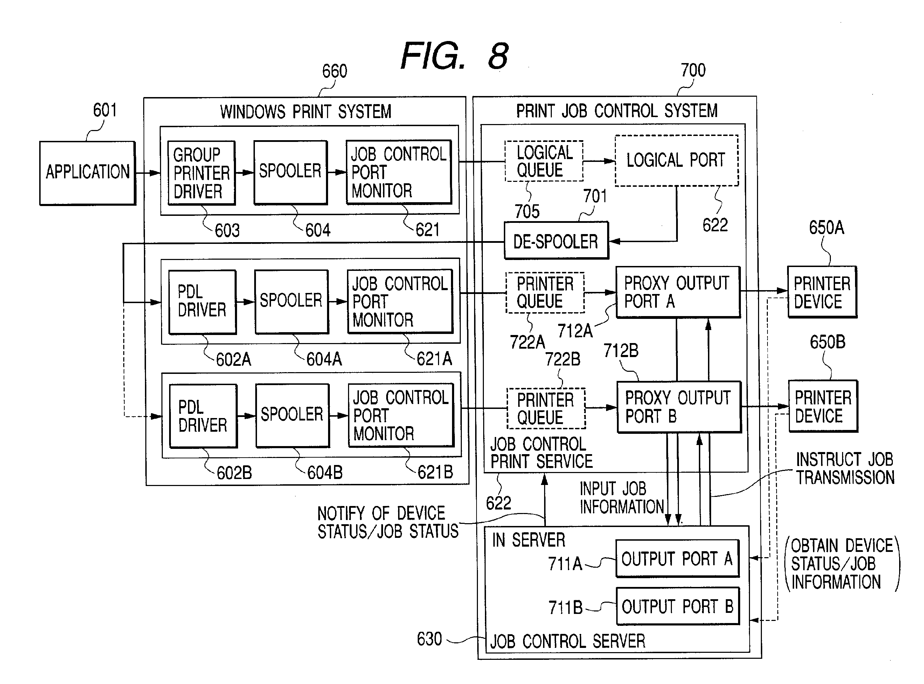

Subsequently, an example of performing the proxy printing by using a plurality of queues will be described with reference to Fig. 8. The print queue 13 in Fig. 1 mentioned above corresponds to printer queues 722A and 722B in Fig. 8. The job forming unit 11 in Fig. 1 corresponds to a group printer driver 603 and PDL drivers 602A and 602B in Fig. 8. The job management unit 12 in Fig. 1 corresponds to a job control print service in Fig. 8. The print processing unit 14 in Fig. 1 corresponds to printer controllers in printer devices 650A and 650B. A relation between the print system which is provided by Windows (registered trademark) and the print jobs in a print job control system and an outline of processes will be described further in detail. A processing system of Fig. 8 relates to the printing process which is executed via the group printer driver 603.

A print job control system 700 in Fig. 8 shows a range of the print job control system which stretches over physical machines in which control programs of a server 101 and a client 102, 103, or 104 operate. An output port 711 which is managed by the server 101 is concerned with a proxy output port 712 of a job control print service 622 of the client. All proxy output ports on each client concerned with one port are unitarily managed.

In the embodiment, actual print job data is held in the proxy output port 712 of each client. A job control server 630 does not executes a transmitting process of print job data itself but executes only a transmitting instruction of the print job to the job control print service 622. In response to the instruction, the job control print service 622 of the client transmits the print job data to a printer device 650.

Subsequently, processes in the case where the print job control system 700 executes printing with an added value such as proxy printing, distribution printing, multi-address printing, or the like will be described.

When the print job control system 700 executes the printing with an added value such as proxy printing, distribution printing, multi-address printing, or the like, as one method, it is necessary that the user or an application 601 issues the print job to the printer to which the group printer driver 603 has been allocated as mentioned above. As will be explained hereinlater, as another method, if the port of the output destination of a PDL driver 602 has been allocated to a job control port monitor 621, the print job can be issued to the PDL driver 602.

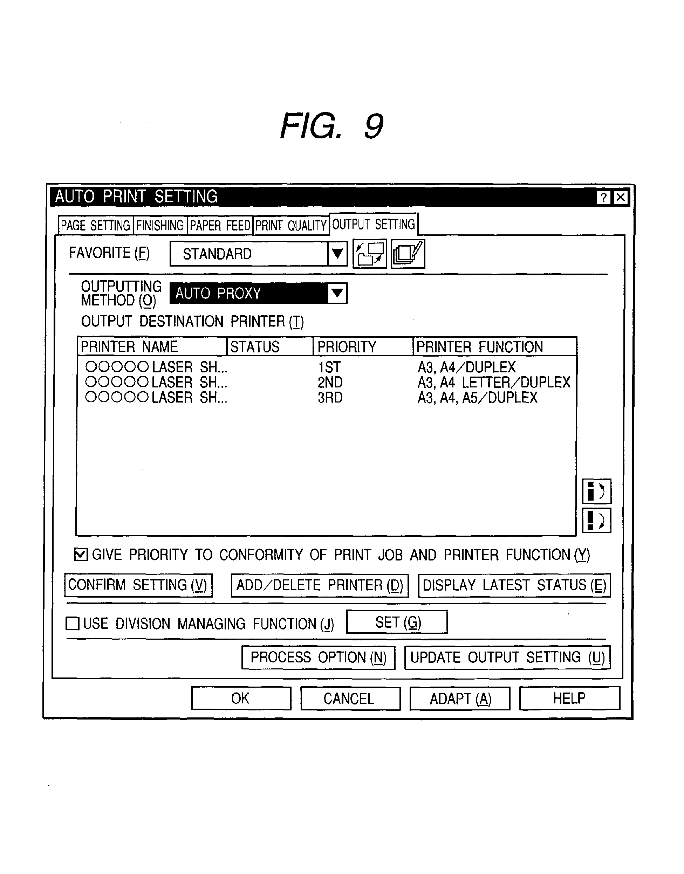

When the application 601 starts the printing process, the group printer driver 603 obtains logical queue information (which will be explained hereinlater) of the job control print service 622 and sets information which can be referred to by a print property into a general print file. Fig. 9 shows an example of a user interface display screen for setting the print property of logical printer management 705. As shown in the diagram, "auto proxy" can be selected as an outputting method here and, further, an output destination printer (member printer driver) can be registered in a state where a priority is added thereto.

The job control print service 622 receives the job data, as a general print file, processed by the group printer driver 603 via the job control port monitor 621. The job control print service 622 receives the print job and issues a job (member job) to another printer to which a PDL driver has been allocated via a de-spooler 701, thereby allowing the printer to print. In a manner similar to that of an ordinary application, the de-spooler 701 forms a draw command (GDI function) via drawing means of an OS and outputs it on the basis of document data of the general print file as a print job, and the PDL driver 602A receives a draw command (DDI function).

At this time, the de-spooler 701 interprets a print instructing unit (job ticket unit) of general print file, modifies document data of a document data unit, converts it into a GDI of Windows (registered trademark), instructs each printer driver to print, and issues the print job. For example, if an instruction "2-UP" has been recorded in a print style designating unit, the document data of two pages is reduced and arranged onto one sheet. In the case of the distribution printing or the multi-address printing, jobs are issued to a plurality of member printers described in the print instructing unit in accordance with the setting. In the case of the proxy printing, when conditions for performing the proxy printing are satisfied, the member job is issued in accordance with the previous setting in the automatic proxy or in accordance with the operation of the user in the manual proxy.

There is also presumed a form such that the instruction information corresponding to each member printer driver is extracted from the print instructing unit to a module different from the foregoing de-spooler 701 and the de-spooler 701 interprets the extracted print instruction to each of the extracted member printer drivers.

Further, when the job is issued to each member printer, as a print instruction corresponding to each member printer driver, the de-spooler 701 needs to form DEVMODE (print set information) of each member printer. DEVMODE is formed by properly reflecting contents disclosed in the print instructing unit to DEVMODE of each member printer. In the embodiment, since the explanation is made with respect to the print system using Windows (registered trademark) 2000 or Windows (registered trademark) XP as an OS of Microsoft Corporation in U.S.A., DEVMODE as a structure which can be controlled by the printer driver is used as print set information. However, it is unnecessary that the print set information is limited to DEVMODE but a file in an XML format in which the print set information has been described can be used. That is, a method of transferring the print set information to the printer driver differs depending on the OS and the invention is not limited to one of them.

The job control print service 622 on the client side receives PDL data of each member job formed by the PDL driver 602 via the job control port monitor 621 and notifies the server 101 side of the information regarding the received print job in the PDL format. The job data is temporarily held in its own proxy output port 712A or 712B. After that, when a transmitting instruction from the job control server 630 is received, the print job control system 700 transmits the print data in the PDL format to the printer device 650 via the proxy output port 712.

With the construction of Fig. 8, for example, in the case of (automatically or manually) performing the proxy of the job stored in the printer queue 722A, the job control print service moves the job to the printer queue 722B in response to an instruction of the (automatic or manual) proxy and outputs the job to the printer device 650B, so that the proxy printing from the printer device 650A to the printer device 650B can be executed.

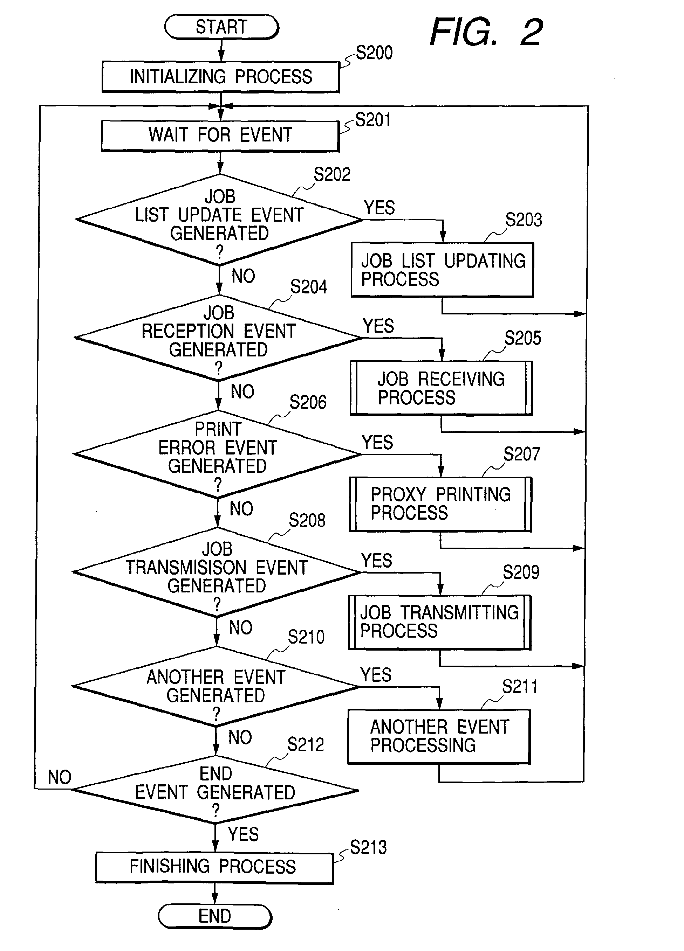

Fig. 2 is a flowchart for explaining an outline of a program of processes in the program control unit. First, in step S200, the program control unit 16 itself and the subsystem are initialized. In next step S201, the processing routine enters an infinite loop for waiting for an event. Step S201 is finished when an event such as mouse, keyboard, job reception, or the like is generated and the processing routine advances to the following event process.

In step S202, whether the generated event is an update event of the job list or not is discriminated. If YES, in step S203, the program control unit 16 obtains a list of new job information from the job management unit 12 and instructs the job display unit 17 to update and display the list of the job information. After completion of step S203, the processing routine advances to the process for waiting for the event in step S201.

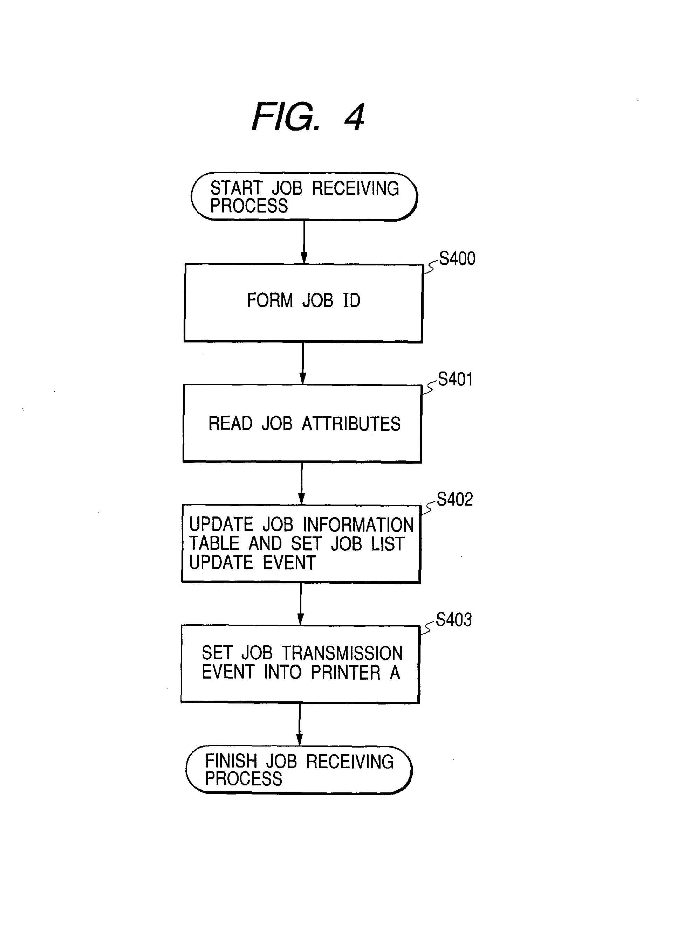

If NO in step S202, whether the generated event is a job reception event or not is discriminated in subsequent step S204. If YES, the processing routine advances to a job receiving process in step S205. Details of this process will be explained hereinlater with reference to Fig. 4. After completion of step S205, the processing routine advances to the process for waiting for the event in step S201.

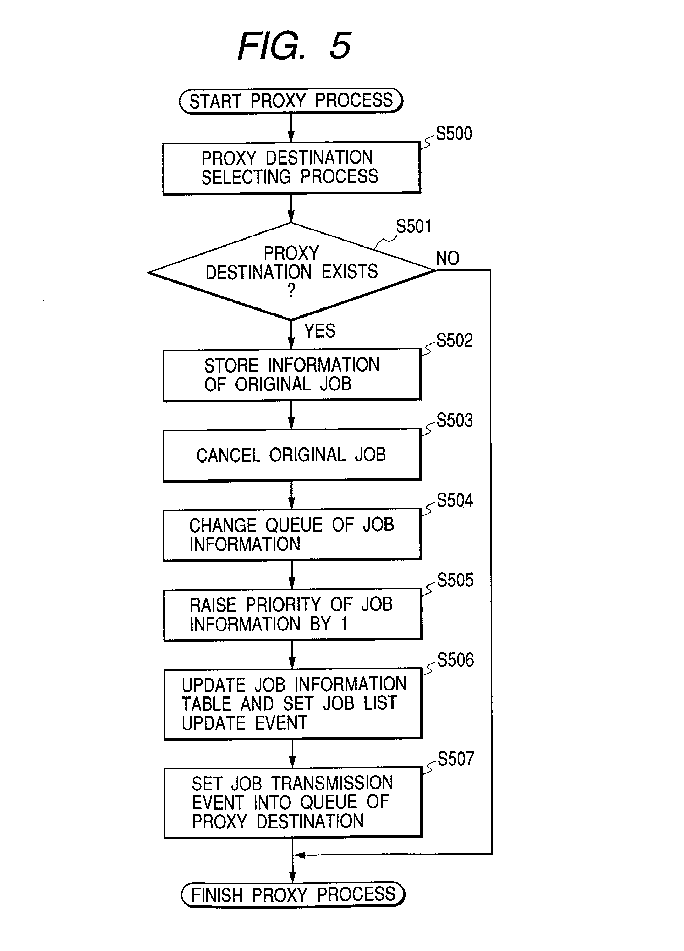

If NO in step S204, whether the generated event is a print error event or not is discriminated in subsequent step S206. If YES, a proxy printing process is executed in step S207. Details of this process will be explained hereinlater with reference to Fig. 5. After completion of step S207, the processing routine advances to the process for waiting for the event in step S201.

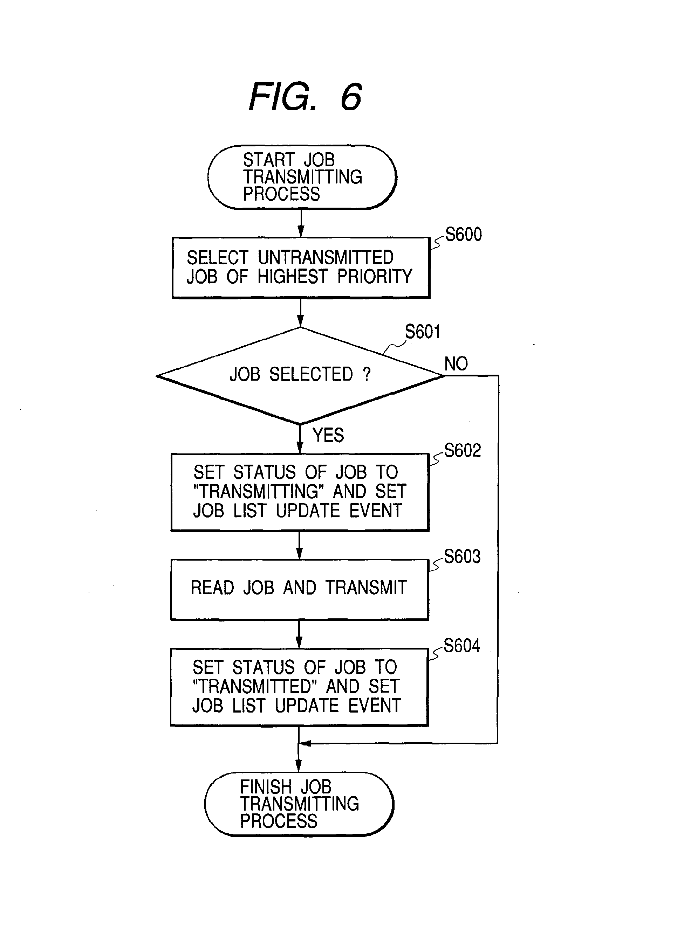

If NO in step S206, whether the generated event is a job transmission event or not is discriminated in subsequent step S208. If YES, a job transmitting process is executed in step S209. Details of this process will be explained hereinlater with reference to Fig. 6. After completion of step S209, the processing routine advances to the process for waiting for the event in step S201.

If NO in step S208, whether the generated event is another event or not is discriminated in subsequent step S210. If YES, another event process is executed in next step S211. Since this process is not directly concerned with the present invention, its detailed explanation is omitted here. After completion of step S211, the processing routine advances to the process for waiting for the event in step S201.

If NO in step S210, whether an end event has been generated or not is discriminated in step S212. If NO, it is regarded that an invalid event has been generated and the processing routine is returned to the process for waiting for the event in step S201. If YES, a finishing process in step S213 is executed and the present processing routine is stopped.

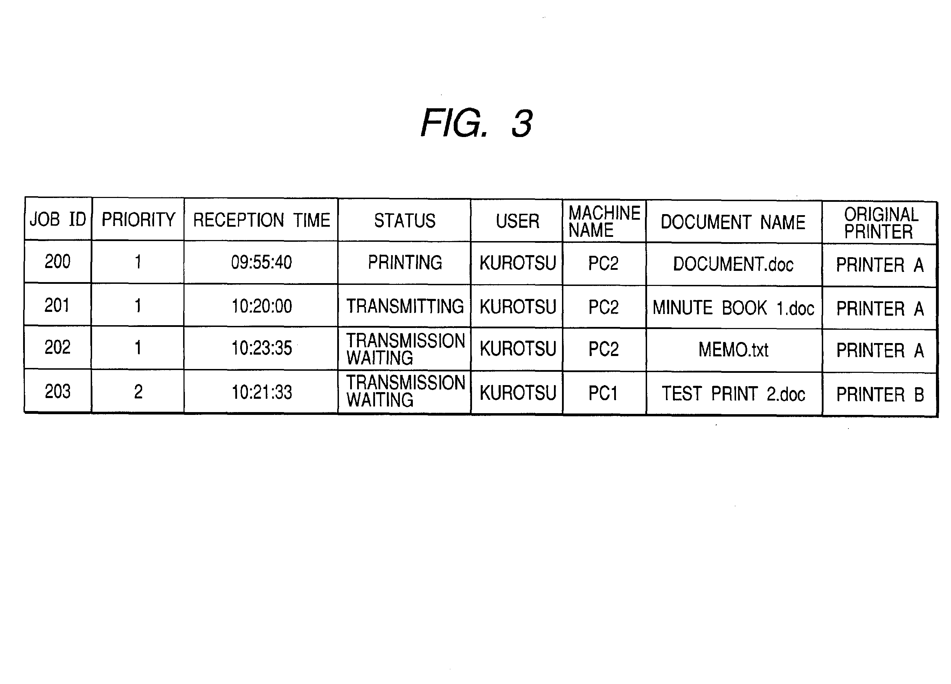

Fig. 3 shows a part of a job information management table held on a memory in the job management unit 12. All jobs have unique identifiers (JobID) in the print system and are managed so as to be distinguished from other jobs. Besides the identifier, each job has information such as processing status, priority, reception time, user name, document name, printing apparatus selected first by the user, and the like. It will be understood from Fig. 3 that there are four jobs in total and a document .doc of a JobID 200 is in a status "printing", the job of JobID 201 is in a status "transmitting", and the other two jobs are in a status "transmission waiting". One job information in the job information management table is generally formed at a point of time when the print system receives the job and this job information is extinguished at a point of time when the paper delivery is completed by the printing apparatus or a cancelling process is executed by a reasons of the user or the device. If the target printing apparatus does not support a paper delivery completion confirming function, the job information is extinguished after completion of the transmission of the job.

Fig. 4 is a flowchart showing an outline of a program of a job receiving process of the print system according to an embodiment of the invention. In the job receiving process, upon reception, first, an identifier (JobID) to uniquely identify this job in the system is allocated in step S400. As a JobID, a unique ID such as UUID (Universally Unique Identifier) or the like can be used. A sequential number issued on the server is used in the system in the embodiment. Subsequently, in step S401, fundamental job attributes, such as the job or queue name, user name, document name, priority, and the like which are used during job script or in printing by an option or the like of the received command, are designated and the job information is formed. If there are attributes which are not designated, values of default prepared in the system are used as attributes. Subsequently, in step S402, the job information formed in step S401 is registered and the job information management table is updated. When the list is updated, a job list update event is set in an interlocking relational manner. When the job list update event is set, the foregoing job list updating process is activated by the system. In next step S403, a job transmission event is set into the print queue designated in step S401. When the job transmission event is set, a job transmitting process is activated. The above processes will be explained in detail with reference to Fig. 6.

Fig. 5 is a flowchart showing an example of a program of a proxy printing process which is executed in the print system according to an embodiment of the invention.

The proxy printing process is automatically executed when an error of the device is generated in the print system of the embodiment of the invention or is executed at arbitrary timing by an instruction of the user (or a command from an external system which monitors the print system).

When the proxy printing process is activated, a proxy destination is selected in a proxy destination selecting process in step S500. As a selecting method of the proxy destination, there are a method of previously registering a substitute queue corresponding to the queue, a method of instructing it as an attribute of the job upon printing, a method whereby candidates are displayed to the operator and he selects a proper one, and the like. Since such a selecting method is not directly concerned with the invention, it is not described in detail here.

Whether a proxy destination has been found or not is discriminated in next step S501. If the proxy destination is not found, the proxy process is finished.

If it is determined in step S501 that the proxy destination exists (YES), the job information of the job to be subjected to the proxy is restored in step S502. This information is used later when the proxy of the job is performed. In next step S503, the original job is cancelled. The print system of the invention can have not only a function such that when a job cancelling process is executed, the job information is deleted but also a function such that while the printing process is executed in the print processing unit, the printing process is interrupted. Further, in step S504, the print queue information of the job information held in step S502 is changed to the print queue selected in step S500. In step S505, the priority of the job is raised by one point. In step S506, new job information is registered into the job information management table. The job processing status in the job information is initialized to "transmission waiting" upon registration. The job list update event is set. In subsequent step S507, the job transmission event is set into the newly selected print queue and the proxy process is finished.

Fig. 6 is a flowchart showing an embodiment of a program of a job transmitting process in the print system of an embodiment of the invention. In the print system of the embodiment of the invention, the job transmitting processes are activated in parallel every print queue. In the job transmitting process, in step S600, one job of the highest priority among the untransmitted jobs (the jobs in each of which the status is a status before "transmitting") is selected. If it is determined in step S601 that the job is not selected, this means that the untransmitted job does not exist in the print queue which is at present being processed. The job transmitting process is finished.

If the job is selected in step S601, the status of the job is updated to "transmitting" and the job list update event is set in step S602. In next step S603, the job data is read and the job is transferred to the print processing unit. As a transferring method of the job, although there are many methods such as LPR, FTP, IPP, and the like, since they are not directly concerned with the invention, its explanation is omitted here. Since processes which are executed when the job transmission fails are also not directly concerned with the invention, their explanation is omitted here. After completion of the job transmission, the status of the job is set to "transmitted" and the job list update event is set in step S604. The job transmitting process is finished.

As described above, in the print system according to the embodiment of the invention, at the time of the proxy printing, by automatically raising the priority of the job by one point, the smooth scheduling is executed and the scheduling in the whole system can be optimized. Therefore, the problem such that the job is added to the last of the queue of the proxy destination at the time of the proxy printing and it takes a surplus longer output time or the problem such that the job unconditionally outruns another job can be avoided.

### (Other embodiments)

Although the embodiment has been described above with respect to an example in which the smooth scheduling is executed by automatically raising the priority of the job by one point upon proxy printing, subsequently, explanation will be made with respect to another embodiment in which the smooth scheduling is executed by automatically setting the priority of the job in accordance with the reception time of the job upon proxy printing.

Since the print system, the processes in the program control unit, the job receiving process, the job transmitting process, and the like are similar to those in the foregoing embodiment, their explanation is omitted here.

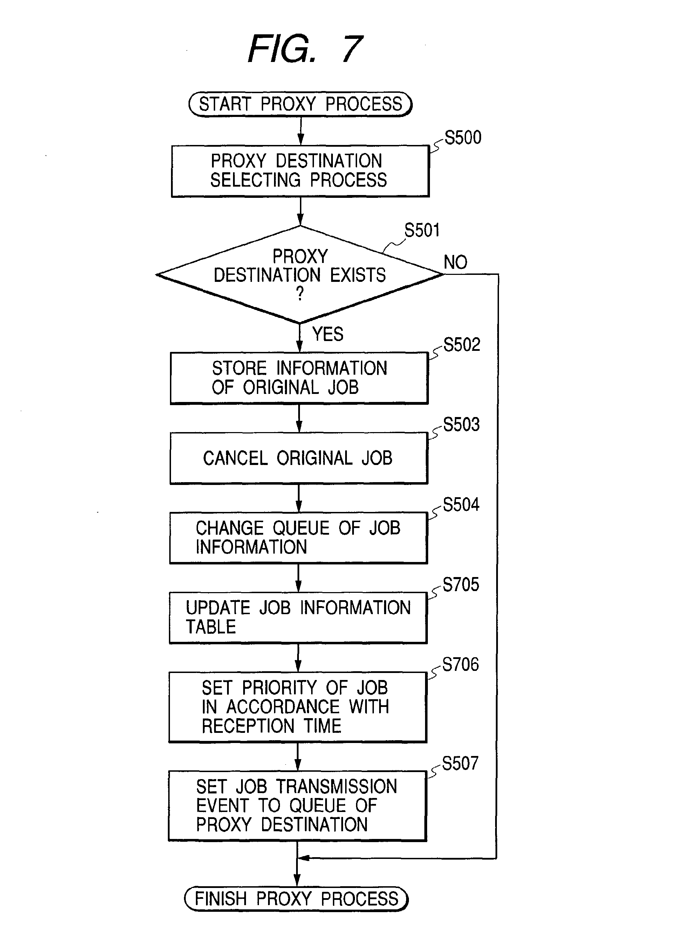

Fig. 7 is a flowchart showing an embodiment of the proxy printing processes which are executed in the print system according to another embodiment of the invention.

The proxy printing process is automatically executed when an error of the device is generated in the print system of the invention, or it is executed at arbitrary timing by an instruction of the user (or a command from an external system which monitors the print system).

When the proxy printing process is activated, a proxy destination is selected in the proxy destination selecting process in step S500. As a selecting method of the proxy destination, there are a method of previously registering a substitute queue corresponding to the queue, a method of instructing it as an attribute of the job upon printing, a method whereby candidates are displayed to the operator and he selects a proper one, and the like. Since such a selecting method is not directly concerned with the invention, it is not described in detail here.

In subsequent step S501, whether the proxy destination has been found or not is discriminated. If the proxy destination is not found, the proxy process is finished.

If it is determined in step S501 that the proxy destination exists (YES), the job information of the job to be subjected to the proxy is restored in step S502. This information is used later when the proxy of the job is performed. In next step S503, the original job is cancelled. The print system of the invention can have not only a function such that when the job cancelling process is executed, the job information is deleted but also a function such that while the printing process is executed in the print processing unit, the printing process is interrupted. Further, in step S504, the print queue information of the job information held in step S502 is changed to the print queue selected in step S500. In step S705, new job information is registered into the job information management table. The job processing status in the job information is initialized to "transmission waiting" upon registration. In step S706, the priorities of the jobs in the proxy destination queue are reset in accordance with the reception time of the job.

For example, in Fig. 3, if the proxy destination of a job shown by JobID 203 is changed from the Printer A to the Printer B, since the reception time of JobID 203 is 10:21:33, this job is preferentially executed rather than the job of JobID 202 whose reception time is 10:23:35. Therefore, the priority of JobID 203 is set to 2. If the proxy of the job received at 10:22:00 between JobID 202 and JobID 203 is performed, the priority of this job is set to 2 and that of JobID 203 is set to 3. After the priorities of the jobs were reset, the job transmission event is set into the proxy destination queue and the proxy process is finished.

As described above, in the print system according to the embodiment of the invention, the smooth scheduling is executed by automatically setting the priority of the job in accordance with the reception time of the job upon proxy printing and the scheduling in the whole system can be optimized. Therefore, the problem such that the job is added to the last of the queue of the proxy destination at the time of the proxy printing and it takes a surplus longer output time or the problem such that the job unconditionally outruns another job can be avoided.

Naturally, the invention may also be accomplished by a method whereby a memory medium in which program codes of software to realize the functions (the processes in the program control unit, the job receiving process, the proxy printing process, the job transmitting process, etc.) of the embodiments mentioned above have been recorded is supplied to a system or an apparatus and a computer (or a CPU or an MPU) of the system or the apparatus reads out and executes the program codes stored in the memory medium.

In this case, the program codes themselves read out from the memory medium realize the functions of the embodiments mentioned above and the memory medium in which the program codes have been stored constructs the invention.

As a memory medium for supplying the program codes, for example, a floppy disk, a hard disk, an optical disk, a magnetooptic disk, a CD-ROM, a CD-R, a magnetic tape, a non-volatile memory card, a ROM, or the like can be used.

Naturally, the invention incorporates not only a case where a computer executes the read-out program codes, so that the functions of the embodiments mentioned above are realized but also a case where an OS (Operating System) or the like which is operating on the computer executes a part or all of actual processes on the basis of instructions of the program codes and the functions of the embodiments mentioned above are realized by those processes.

Further, naturally, the invention also incorporates a case where the program codes read out from the memory medium are written into a memory provided for a function expanding board inserted into a computer or a function expanding unit connected to a computer and, thereafter, a CPU or the like provided for the function expanding board or the function expanding unit executes a part or all of actual processes on the basis of instructions of the program codes and the functions of the embodiments mentioned above are realized by those processes.

## Claims

1. A print control apparatus comprising:
a changing unit for changing a priority of a job when proxy printing is executed; and
an executing unit for executing a printing process on the basis of the priority changed by said changing unit.

2. An apparatus according to claim 1, wherein said proxy printing is executed by changing a queue of a print job.

3. An apparatus according to claim 1, wherein said changing unit raises the priority.

4. An apparatus according to claim 1, wherein said changing unit changes the priority on the basis of reception time of a print job.

5. An apparatus according to claim 1, wherein when reception time of the job which is proxy-printed is earlier than that of a print job which has already existed, said changing unit raises the priority of the job which is proxy-printed.

6. A print control method comprising:
a changing step of changing a priority of a job when proxy printing is executed; and
an executing step of executing a printing process on the basis of the priority changed by said changing step.

7. A method according to claim 6, wherein said proxy printing is executed by changing a queue of a print job.

8. A method according to claim 6, wherein in said changing step, the priority is raised.

9. A method according to claim 6, wherein in said changing step, the priority is changed on the basis of reception time of a print job.

10. A method according to claim 6, wherein in said changing step, when reception time of the job which is proxy-printed is earlier than that of a print job which has already existed, the priority of the job which is proxy-printed is raised.

11. A program product comprising:
a changing step of changing a priority of a job when proxy printing is executed; and
an executing step of executing a printing process on the basis of the priority changed by said changing step.

12. A product according to claim 11, wherein said proxy printing is executed by changing a queue of a print job.

13. A product according to claim 11, wherein in said changing step, the priority is raised.

14. A product according to claim 11, wherein in said changing step, the priority is changed on the basis of reception time of a print job.

15. A product according to claim 11, wherein in said changing step, when reception time of the job which is proxy-printed is earlier than that of a print job which has already existed, the priority of the job which is proxy-printed is raised.

16. A print system which manages print data on a job unit basis, comprising:
a plurality of print queues for managing a plurality of jobs;
scheduling means for processing a print job inputted to each of the queues on the basis of priorities allocated to the jobs;
proxy means for executing proxy printing by moving the job from an original queue to another queue; and
priority changing means for raising the priority of the job when the proxy printing is executed by said proxy means.

17. A system according to claim 16, wherein said priority changing means raises the priority on the basis of reception time of the job.
